# EUROPEAN PATENT APPLICATION

(11) **EP 3 636 486 A1**
(43) Date of publication of application: **15.04.2020**
(21) Application number: 18808878.5
(22) Date of filing: 01.06.2018
(51) Int. Cl.: B60N 2/52, B60N 2/54

(54) **SUSPENSION MECHANISM**

(30) Priority: 02.06.2017 JP 2017110498
(71) Applicant: Delta Kogyo Co., Ltd., Aki-gun, Hiroshima 735-8501 (JP); Delta Tooling Co., Ltd., Hiroshima-shi, Hiroshima 736-0084 (JP)
(72) Inventor: FUJITA Etsunori, Hiroshima-shi Hiroshima 736-0084 (JP); OGURA Yumi, Aki-gun Hiroshima 735-8501 (JP); KOJIMA Shigeyuki, Aki-gun Hiroshima 735-8501 (JP); MASHINO Masahiro, Aki-gun Hiroshima 735-8501 (JP)
(74) Representative: Hoffmann Eitle
(86) International application number: PCT/JP2018/021287
(87) International publication number: WO 2018/221744

(57) **Abstract**

To make it possible to improve seated person's posture stability with respect to input vibration, and more improve a vibration absorption characteristic or an impact absorption characteristic caused by impact vibration as compared with conventional ones. A suspension mechanism 1 has a structure in which two suspension units 100, 200 which support a movable support part 140 and a seat support part 240 through link mechanisms 110, 120 respectively are arranged in two upper and lower stages, and a configuration such that, when the movable support part 140 and the seat support part 240 move up and down relatively in response to input vibration, the two link mechanisms 110, 210 supporting the respective parts are operated to rotate in opposite directions to each other. Therefore, a position of a hip point of a person seated on a seat supported by the seat support part 240 is displaced in an approximately vertical trajectory, which reduces forward and backward swinging and stabilizes a seating posture, resulting in good ride comfort, as compared with a case of one link mechanism.

## Description

### Technical Field

The present invention relates to a suspension mechanism suitable for support for a seat of a vehicle.

### Background Art

Patent Documents 1, 2 disclose a seat suspension in which an upper frame provided to be movable up and down relative to a lower frame is elastically supported by a magnetic spring and torsion bars. It is disclosed that, in a case where a characteristic that restoring force in the same direction as a working direction of restoring force of the torsion bars increases in accordance with an increase in a displacement amount is referred to as "a positive spring characteristic (a spring constant at this time is referred to as "a positive spring constant") and a characteristic that the restoring force in the same direction as the working direction of the restoring force of the torsion bars decreases in spite of the increase in the displacement amount is referred to as "a negative spring characteristic (a spring constant at this time is referred to as "a negative spring constant"), by making use of the fact that the magnetic spring exhibits the negative spring characteristic in a predetermined displacement range and combining the torsion bars exhibiting the positive spring characteristic, the seat suspension has a characteristic of a constant load region where a load value relative to a displacement amount in the whole system resulting from the superposition of the characteristics of both in the predetermined displacement range is substantially constant (a region where a spring constant is substantially zero).

### Prior Art Document

### Patent Document

Patent Document 1: Japanese Patent Application Laid-open No. 2010-179719
Patent Document 2: Japanese Patent Application Laid-open No. 2010-179720

### Summary of the Invention

### Problems to Be Solved by the Invention

In the suspension of Patent Documents 1, 2, owing to the aforesaid structure using the magnetic spring and the torsion bars, normal vibrations having predetermined frequencies and amplitudes are absorbed using the constant load region where the spring constant resulting from the superposition of the spring constants of both is substantially zero, while energy caused by impact vibration is absorbed by a damper suspended between the upper frame and the lower frame.

Accordingly, the suspension of Patent Documents 1, 2 exhibits excellent vibration absorption characteristic and impact absorption characteristic, but a parallel link structure is employed in each of Patent Documents 1, 2, so that a seated person's hip point is displaced forward and backward in accordance with up-down movement, which provides room for improvement in terms of safety of a seating posture. Further, in a driver seat of a construction machine, or the like, because there are many chances to run on a road surface having large bumps and potholes, emphasis is put on an improvement in measures against impact vibration having a larger amplitude.

The present invention was made in consideration of the above problem, and has an object to provide a suspension mechanism capable of improving seated person's posture stability with respect to input vibration, and capable of more improving a vibration absorption characteristic or an impact absorption characteristic to impact vibration as compared with conventional ones.

### Means for Solving the Problems

In order to solve the aforesaid problem, the suspension mechanism of the present invention is a suspension mechanism which includes:
a first suspension unit including a movable support part supported to be movable up and down through a first link mechanism, a spring mechanism, and a damper relative to a fixed part; and
a second suspension unit including a seat support part disposed above the first suspension unit and supported to be movable up and down through a second link mechanism, a spring mechanism, and a damper relative to the movable support part,
wherein rotational directions of the first link mechanism and the second link mechanism are set so as to be opposite to each other in terms of the front-back direction on a basis of the respective rotation centers.

Preferably, as each of the dampers, one whose elongation-side damping force is higher than a contraction-side damping force is used. Preferably, as the dampers, ones in which at least one of the elongation-side damping force and the contraction-side damping force is different are used.

Preferably, the spring mechanism of one of the first suspension unit and the second suspension unit includes: a linear spring exhibiting a linear characteristic; and a magnetic spring including stationary magnets, and a movable magnet whose relative position to the stationary magnets is displaced in accordance with relative operation of the intermediate frame or the upper frame, and exhibiting a nonlinear characteristic that a spring constant is changed in accordance with the relative position of the stationary magnets and the movable magnet, and includes a characteristic that a spring constant is substantially zero in a predetermined displacement range.

Preferably, the spring mechanism of the other of the first suspension unit and the second suspension unit is constituted of a linear spring exhibiting a linear characteristic.

Note that, preferably, the linear spring is a torsion bar.

Preferably, an up-down stroke of the first suspension unit and an up-down stroke of the second suspension unit are equal to each other.

Further, the suspension mechanism of the present invention is suitable for support for a seat of a driver seat of a construction machine.

### Effect of the Invention

In the present invention, a suspension mechanism has a structure in which two suspension units which support a movable support part and a seat support part through the respective link mechanisms are arranged in two upper and lower stages, and a configuration such that, when the movable support part and the seat support part move up and down relatively in response to input vibration, the two link mechanisms supporting the respective parts are operated to rotate in opposite directions to each other. Therefore, a position of a hip point of a person seated on a seat supported by the seat support part is displaced in an approximately vertical trajectory, which reduces forward and backward swinging and stabilizes a seating posture, resulting in good ride comfort, as compared with a case of one link mechanism.

Further, since the two suspension units are used, employing dampers having different damping characteristics in the respective ones makes it easy to be configured to have a characteristic having a higher damping force, to be configured to enhance a vibration absorption characteristic with respect to microvibration by combination with one whose damping force is small, and to set characteristics according to the objects using the suspension mechanism of the present invention (a passenger car, a construction machine, and the like), as compared with a conventional structure having a single-stage suspension unit. For example, employing one whose damping force is equal to or more than a predetermined damping force for each of the upper and lower suspension units makes it possible to obtain a high impact absorption characteristic, which makes it easy to be configured to be suitable for a driver seat of the construction machine having many chances to run on a road surface having bumps and potholes.

### Brief Description of Drawings

[FIG. 1] FIG. 1 is a perspective view illustrating a suspension mechanism according to a first embodiment of the present invention and a seat supported by the suspension mechanism.
[FIG. 2] FIG. 2 is a front view of FIG. 1.
[FIG. 3] FIG. 3 is a side view of FIG. 1.
[FIG. 4] FIG. 4 is an A-A line sectional view of FIG. 2, and a view illustrating a state where a movable support part and a seat support part are each located at a lower limit.
[FIG. 5] FIG. 5 is an A-A line sectional view of FIG. 2, and a view illustrating a state where the movable support part and the seat support part are each located at an upper limit.
[FIG. 6] FIG. 6 is a perspective view illustrating a first suspension unit.
[FIG. 7] FIG. 7 is a plane view of FIG. 6.
[FIG. 8] FIG. 8 is a side view of FIG. 6.
[FIG. 9] FIG. 9 is a B-B line sectional view of FIG. 7.
[FIG. 10] FIG. 10 is a C-C line sectional view of FIG. 7.
[FIG. 11] FIG. 11 is a perspective view illustrating a second suspension unit.
[FIG. 12] FIG. 12 is a view illustrating a trajectory of a seated person's hip point (H. P.) when only the first suspension unit moves up and down.
[FIG. 13] FIG. 13 is a view illustrating a trajectory of a seated person's hip point (H. P.) when only the second suspension unit moves up and down.
[FIG. 14] FIG. 14 is a view illustrating a trajectory of a seated person's hip point (H. P.) when both of the first suspension unit and the second suspension unit move up and down.
[FIG. 15] FIG. 15 is a chart illustrating one example of load-deflection characteristics of a spring mechanism, torsion bars, and a magnetic spring.
[FIG. 16] FIG. 16 is a chart illustrating damping force characteristics of three dampers capable of being employed as a first damper or a second damper.
[FIG. 17] FIG. 17 is a chart illustrating damping forces of various dampers when a speed is 0.3 m/s.
[FIG. 18] FIG. 18 is a chart illustrating a load-deflection characteristic of the first suspension unit using a "VEP" damper as the first damper.
[FIG. 19] FIG. 19 is a chart illustrating a load-deflection characteristic of the first suspension unit using a "B-3" damper as the first damper.
[FIG. 20] FIG. 20 is a chart illustrating measured results of vibration transmissibilities of the first suspension units.
[FIG. 21] FIG. 21 is a chart illustrating load-deflection characteristics of the second suspension unit.
[FIG. 22] FIG. 22 is a chart illustrating damping ratios of the second suspension unit.
[FIG. 23] FIG. 23 is a chart illustrating a measured result of vibration transmissibility of the suspension mechanism when it is vibrated with a 32 mm amplitude (p-p).

### Modes for Carrying out the Invention

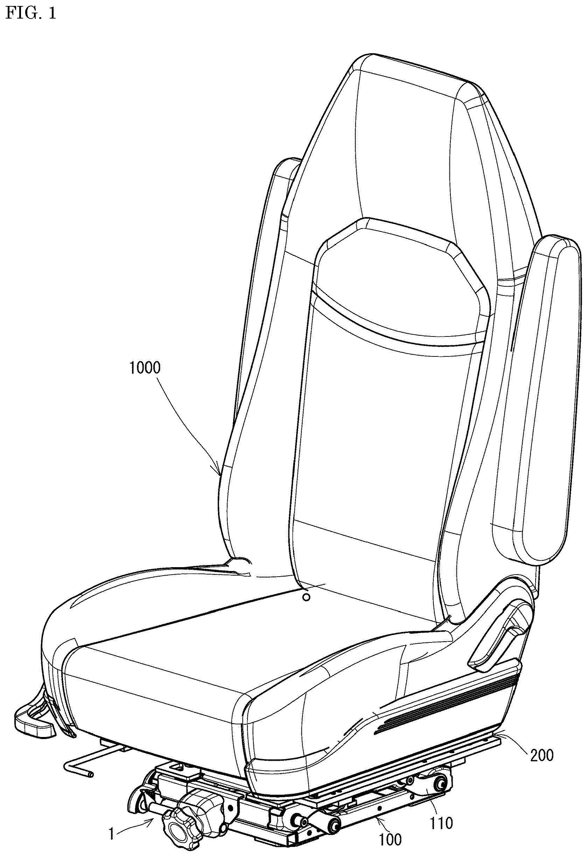

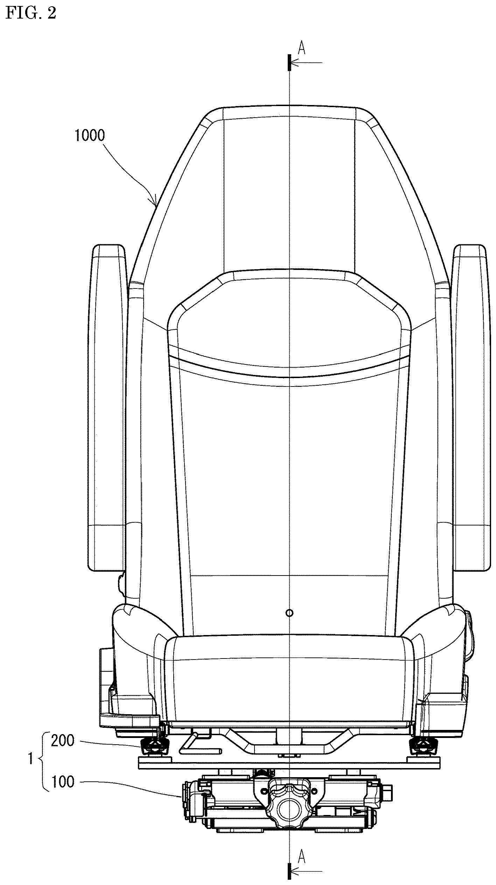

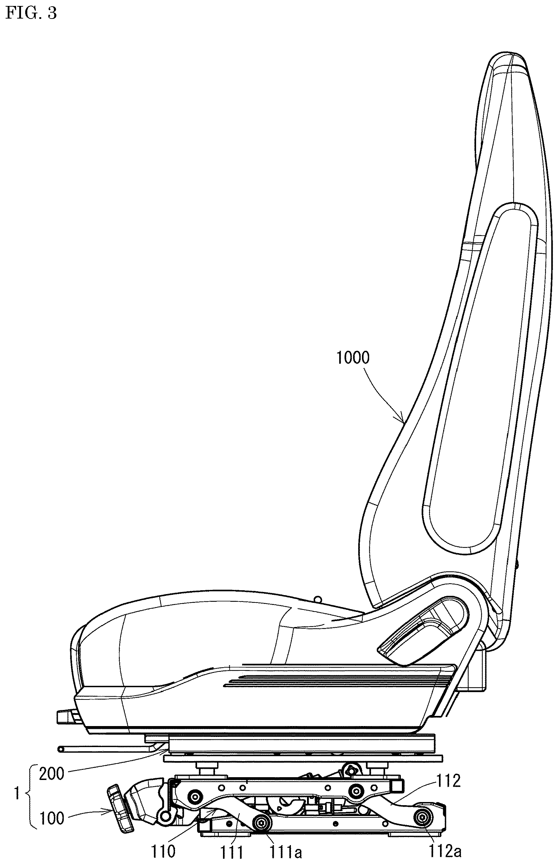

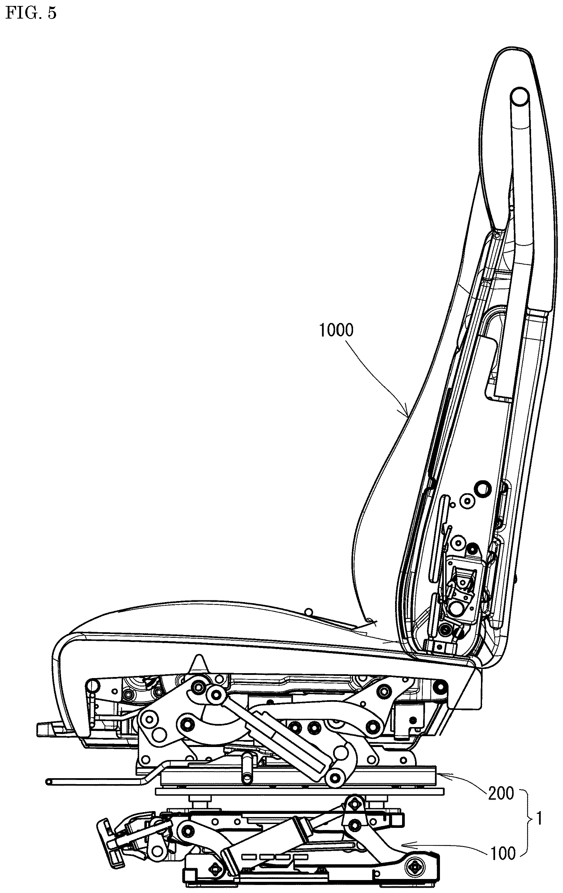

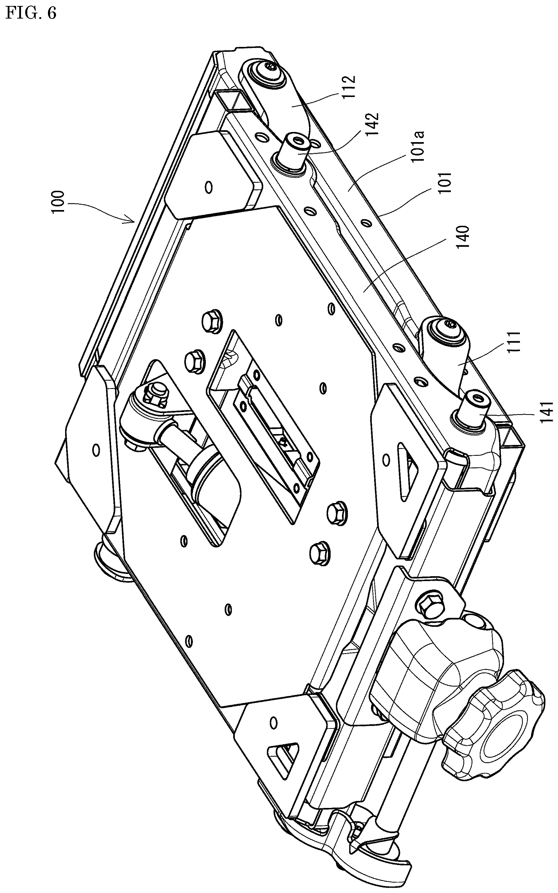

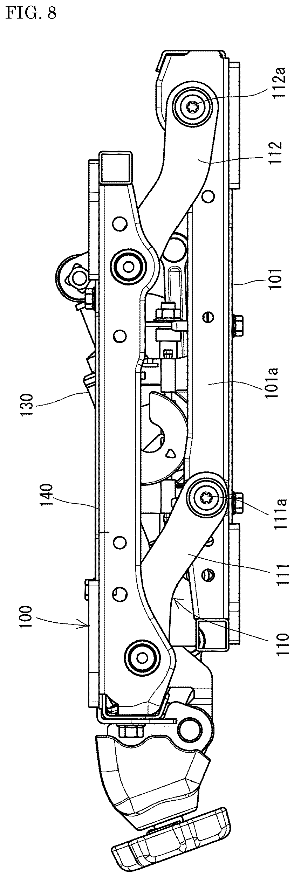

The present invention will be hereinafter described in more detail based on embodiments illustrated in the drawings. FIG. 1 to FIG. 14 illustrate an example of applying a suspension mechanism 1 according to a first embodiment of the present invention to support for a seat 1000 for vehicles such as a passenger car, a truck, a bus, and a forklift. As illustrated in these drawings, the suspension mechanism 1 of this embodiment has a first suspension unit 100 and a second suspension unit 200.

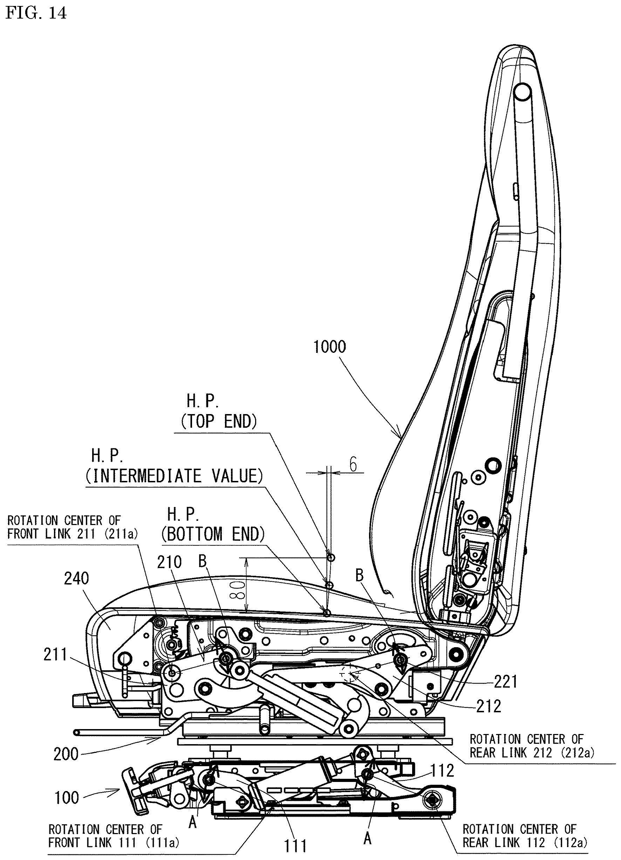

The first suspension unit 100 includes a movable support part 140 supported to be movable up and down through a first link mechanism 110, a spring mechanism 120, and a damper 130 relative to a fixed part 101 integrally fixed to a vehicle body floor. The first link mechanism 110 has a pair of left and right front links 111, 111 and a pair of left and right rear links 112, 112. In the front links 111, 111, lower portions 111a, 111a are supported rotatably at a position close to the front portion of side edge portions 101a of the fixed part 101, and upper portions 111b, 111b are linked to a front frame 141 of the substantially quadrangular plate-shaped movable support part 140. In the rear links 112, 112, lower portions 112a, 112a are supported rotatably at a position close to the rear portion of the side edge portions 101a of the fixed part 101, and upper portions 112b, 112b are linked to a rear frame 142 of the movable support part 140. With this structure, the movable support part 140 is movable up and down relative to the fixed part 101, more accurately, since the first link mechanism 110 is constituted by the parallel link structure including the front links 111, 111 and the rear links 112, 112, the movable support part 140 moves up and down along a rotation trajectory of the front links 111, 111 and the rear links 112, 112. That is, with the displacement along rotational directions of the front links 111, 111 and the rear links 112, 112 having the lower portions 111a, 111a, 112a, 112a as rotation centers (A direction in FIG. 14), that is, along a direction in which the front links 111, 111 and the rear links 112, 112 fall forward to go toward a lower limit position and a direction in which they return to the opposite of the above direction to go toward an upper limit position, the movable support part 140 moves up and down.

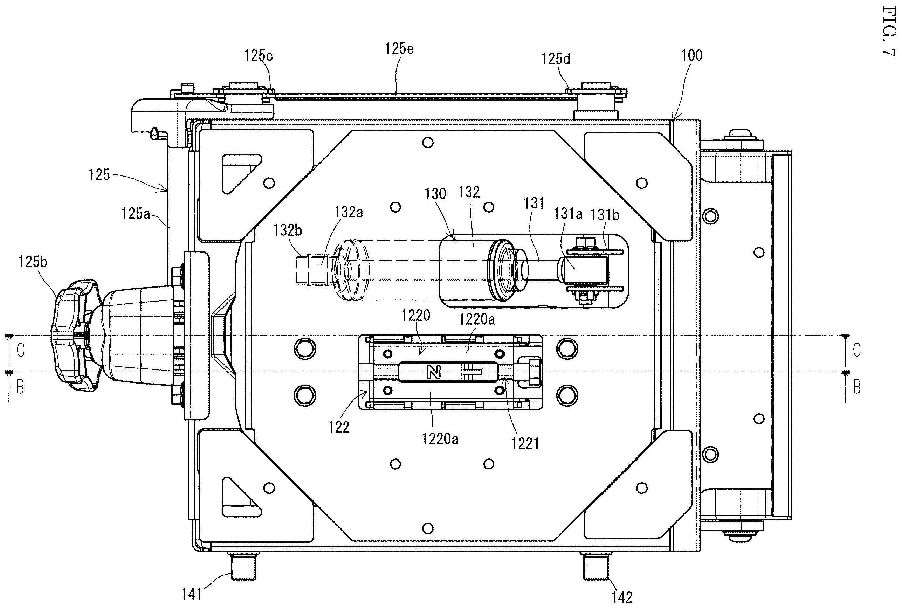

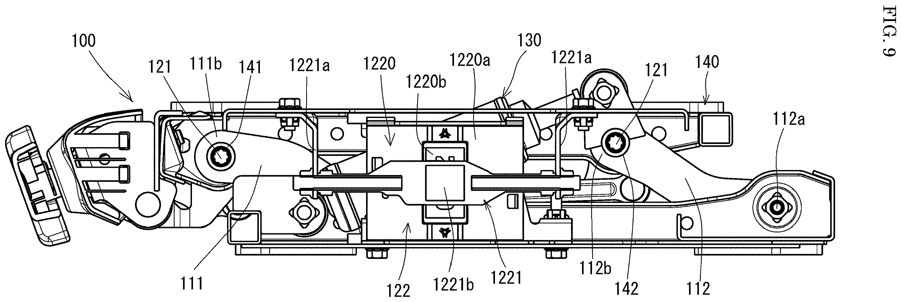

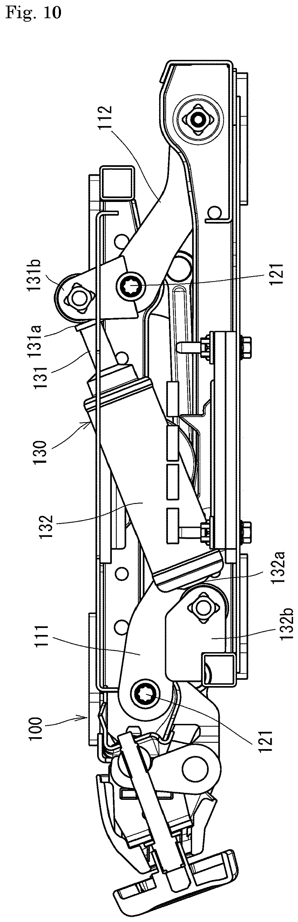

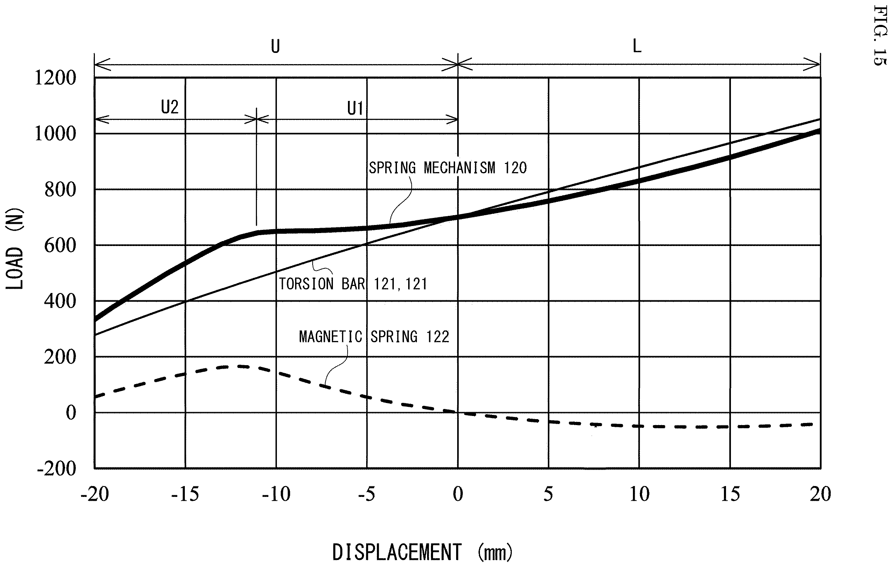

The front frame 141 and the rear frame 142 are each formed of a pipe member in this embodiment, and torsion bars 121, 121 are inserted to the front frame 141 and the rear frame 142 respectively (refer to FIG. 9 and FIG. 10). In this embodiment, the torsion bars 121, 121 are linear springs which exhibit linear characteristics that their load-deflection characteristics change approximately linearly (refer to FIG. 15), and constitute a spring mechanism (hereinafter, referred to as "a first spring mechanism") 120 together with a later-described magnetic spring 122. The torsion bars 121, 121 are provided such that their one-side ends do not rotate relative to the front frame 141 and the rear frame 142 respectively, and the torsion bars 121, 121 are set so as to exhibit elastic force which biases the movable support part 140 in a direction in which the movable support part 140 is relatively separated from the fixed part 101, that is, in an upward direction. The other ends of the torsion bars 121, 121 are connected to plate members 125c, 125d of an initial position adjusting member 125 respectively (refer to FIG. 7).

The initial position adjusting member 125 is configured such that the rotation of its adjustment dial 125b causes the rotation of its adjustment shaft 125a, and this rotation causes the rotation of the plate member 125c connected to the front links 111, 111-side torsion bar 121 and then causes the rotation of the plate member 125d connected to the rear links 112, 112 side-torsion bar 121 linked to the plate member 125c through a link plate 125e. Therefore, when the adjustment dial 125b is operated to rotate, the torsion bars 121, 121 are twisted in either direction, so that initial elastic force of the torsion bars 121, 121 is adjusted, and irrespective of the weight of a seated person, it is possible to adjust the position of the movable support part 140 to a predetermined position (for example, a neutral position). Further, the linear springs which bias the movable support part 140 in the direction in which the movable support part 140 relatively separates from the fixed part 101 are not limited to the torsion bars 121, 121, and may be coil springs or the like. However, in order to obtain a positive spring constant with high linearity in a short-stroke range of the movable support part 140, it is advantageous in terms of simplification, downsizing, and weight reduction of the structure, and the like to use the torsion bars 121, 121 which can be assembled in rotary shaft parts of the front links 111, 111 and the rear links 112, 112 as in this embodiment.

The magnetic spring 122 includes a stationary magnet unit 1220 and a movable magnet unit 1221 as illustrated in FIG. 7 and FIG. 9. The stationary magnet unit 1220 has two stationary-side support frames 1220a, 1220a arranged at a predetermined interval along a width direction of the first suspension unit 100. To the stationary-side support frames 1220a, 1220a, which are fixed to the fixed part 101, stationary magnets 1220b, 1220b are attached respectively. The stationary magnets 1220b, 1220b facing each other at the predetermined interval, for which double-pole magnets are used, and whose different poles are adjacent to each other in a vertical direction, are attached to the stationary-side support frames 1220a, 1220a in a posture in which the same poles face each other the predetermined interval apart from each other.

The movable magnet unit 1221 includes a movable magnet 1221b disposed in a space between the stationary magnets 1220b, 1220b which are disposed to face each other at the predetermined interval. The movable magnet 1221b is supported by magnet attachment brackets 1221a protruded from the movable support part 140 downward, and when the movable support part 140 moves up and down relatively to the fixed part 101, the movable magnet 1221b moves up and down in the space between the stationary magnets 1220b, 1220b together with the movable support part 140. The movable magnet 1221b is magnetized along the up-down moving direction.

The spring characteristic that the magnetic spring 122 exhibits when the movable magnet 1221b moves in the space between the stationary magnets 1220b, 1220b changes depending on a relative position of the movable magnet 1221b and the stationary magnets 1220b, 1220b, and as illustrated in FIG. 15, its load-deflection characteristic is a nonlinear characteristic. More specifically, if a characteristic that restoring force in a working direction of the elastic force (restoring force) of the torsion bars 121, 121 which are the linear springs, that is, in such a direction as to cause the movable support part 140 to separate from the fixed part 101 increases is referred to as a positive spring characteristic, the magnetic spring 122 exhibits, in its load-deflection characteristic, a negative spring characteristic that the restoring force in this direction reduces in a predetermined displacement amount range. That is, the negative spring characteristic is exhibited when the movable magnet 1221b is in a predetermined up-down movement range in the vicinity of a position where it crosses a boundary of N, S poles of the two stationary magnets 1220b, 1220b whose different poles are adjacent to each other in the vertical direction (a range of a reference sign U1 in an example in FIG. 15).

As a result, in the first spring mechanism 120 of this embodiment including the magnetic spring 122 and the aforesaid torsion bars 121, 121, by adjusting a spring constant of the positive spring characteristic of the torsion bars 121, 121 (positive spring constant) and a spring constant of the magnetic spring 122 in the negative spring characteristic range (negative spring constant) to substantially equal values in the range where the negative spring characteristic acts in the magnetic spring 122 (the range of the reference sign U1 in the example in FIG. 15), the whole first spring mechanism 120 in which both the spring constants are superposed has a constant load region where an applied load does not change even if the displacement amount increases, that is, a region where the spring constant is substantially zero (preferably within a range of about -10 N/mm to about 10 N/mm). In order to use this region where the spring constant is substantially zero as effectively as possible, the movable magnet 1221b of the movable magnet unit 1221 is preferably set such that its middle position is substantially at the same position as the boundary of the two stationary magnets 1220b, 1220b whose different poles are adjacent to each other, when the movable support part 140 is at the neutral position of the stroke in the up-down direction.

Note that, in this embodiment, the magnetic spring 122 is placed in a posture in which the movable magnet 1221b moves in the up-down direction between the stationary magnets 1220b, 1220b (vertical placement), but can also be configured to place the stationary magnets 122b, 1220b in a substantially horizontal posture to the fixed part 101 (horizontal placement) and move the movable magnet 1221b in the substantially horizontal direction. Placing the magnetic spring 122 horizontally makes it possible to make a space in the up-down direction when it is placed smaller than placing it vertically, and makes it easy to obtain a thinner suspension mechanism 1, but requires a link mechanism for converting a movement of the movable support part 140 in the up-down direction to a movement of the movable magnet 1221b in the substantially horizontal direction. This causes friction damping in accordance with a movement of the link mechanism and affects an increase in dynamic spring constant when the movable magnet 1221b is operated. In contrast with this, such vertical placement as employed in this embodiment enables the movable magnet 1221b to be supported only by fixing it to the movable support part 140, and has no effect of the friction damping in accordance with the placement of the link mechanism.

Here, FIG. 15 is a chart illustrating load-deflection characteristics of the torsion bars 121, 121, the magnetic spring 122, and the first spring mechanism 120 which are used in the first suspension unit 100. A stroke of the seat suspension 1 of this embodiment is a maximum of 40 mm, and a neutral position thereof is 20 mm. FIG. 15 illustrates the characteristics obtained by setting the neutral position to be zero, and a range of a sign "-" indicates a range from the neutral position to an upper limit position and a range of a sign "+" indicates a range from the neutral position to a lower limit position. As illustrated in this chart, in this embodiment, in a range from about -10 mm to about +10 mm, the magnetic spring 122 exhibits the negative spring characteristic. In this embodiment, moreover, when a spring constant from about -10 mm to 0 mm and a spring constant from 0 mm to about +10 mm are compared, the spring constant of the former is set to be larger, and when the spring constants are superposed on a spring constant of the torsion bars 121, 121, a constant load region is formed in the range from about -10 mm to 0 mm. Further, a very low spring constant is obtained also in the range from 0 mm to about +10 mm.

Next, the damper (first damper) 130 used in the first suspension unit 100 is described. The first damper 130 is a telescopic damper having a piston rod 131 and a cylinder 132 in which a piston attached to the piston rod 131 reciprocates. An end portion 131a of the piston rod 131 is pivotally supported on an attachment bracket 131b attached to the rear frame 142 extending in the width direction at a position close to the rear portion of the movable support part 140. An end portion 132a of the cylinder 132 is pivotally supported on an attachment bracket 132b provided on the fixed part 101 (refer to FIG. 7, FIG. 10). Consequently, when the movable support part 140 moves up and down relative to the fixed part 101, the first damper 130 is also operated to elongate and contract.

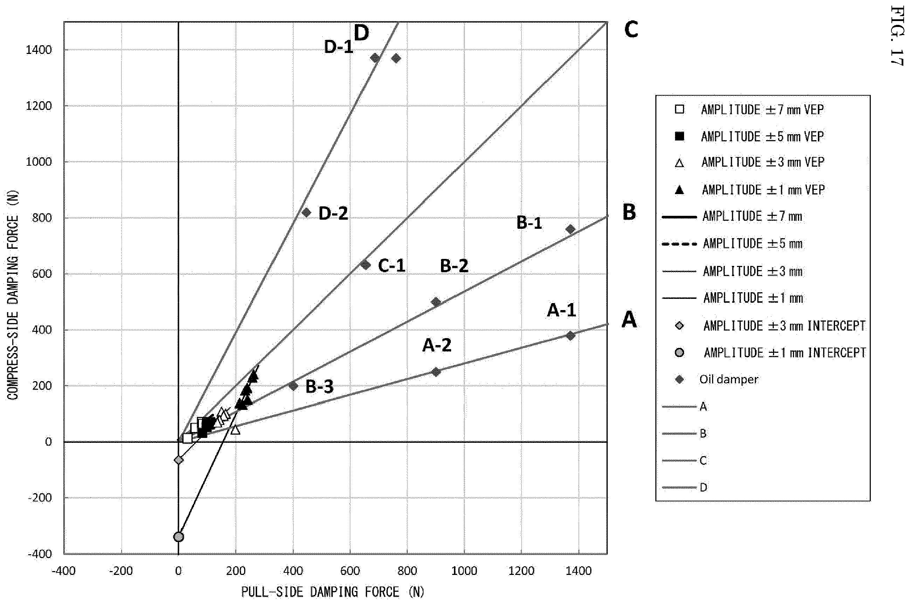

As the first damper 130, for example, in comparison with a second damper 230 used in the second suspension unit 200, one whose damping force is relatively lower can be used. This enables the elongating and contracting operation to be performed more sensitively also to microvibration, which makes it possible to obtain the suspension mechanism 1 excellent in a vibration absorption characteristic. In this case, in the first damper 130, its damping force on each of its elongation side and contraction side when a piston speed is 0.3 m/s is preferably 500 N or less, and more preferably 100 N to 500 N. As the first damper 130, appropriate kinds of dampers such as an oil damper and a friction damper can be employed as long as their damping force is low as described above. Further, with a damper proposed in Japanese Patent Application No. 2016-153526 being the invention made by participation of a part of the inventors of the present application, it is also possible to employ the damper ("VEP" damper) having a structure in which a line-shaped member is wound around an outer periphery of a piston thereof, and a viscous fluid such as grease is made to adhere to the line-shaped member, so that both of a friction damping force and a viscous damping force act. FIG. 17 illustrates an example of damping forces of various dampers at 0.3 m/s, and among these, the "VEP damper" and a "B-3 damper"satisfy the aforesaid essential condition of the first damper 130.

On the other hand, as the first damper 130, one whose damping force is higher can also be used. In this case, by using one whose damping force is high also as the later-described second damper 230, each of the first suspension unit 100 and the second suspension unit 200 has a structure in which a damping characteristic is emphasized, resulting in being suitable for the suspension mechanism 1 supporting a driver seat of a construction machine. As one which absorbs an impact with respect to an input with a large amplitude in the construction machine, the damper 130 preferably has a characteristic that its elongation-side damping force (a speed of 0.3 m/s) exceeds 500 N and its elongation-side damping force is 1.5 times or more as large as its contraction-side damping force. One whose elongation-side damping force is within a range of 1000 to 1500 N when the speed is 0.3 m/s is more preferable. For example, in FIG. 17, dampers of marks of "B-1", "A-1" correspond to the above one. By using the first damper 130 having such a characteristic, more impact energy is absorbed at a time of upward operation of the movable support part 140, resulting in reducing force generated at a time of downward operation, which makes it possible to suppress a bottoming feeling at the time of downward operation. When one whose contraction-side damping force is 1000 N or more is employed in an attempt to absorb a large impact force (dampers of "D-1", "D-2" in FIG. 17), the bottoming feeling is large, but employing the first damper 230 under such a condition as described above causes a reduction in the damping force, and makes it possible to alleviate the impact owing to the elastic force of the spring mechanism 120 to suppress the bottoming feeling, at the time of downward operation.

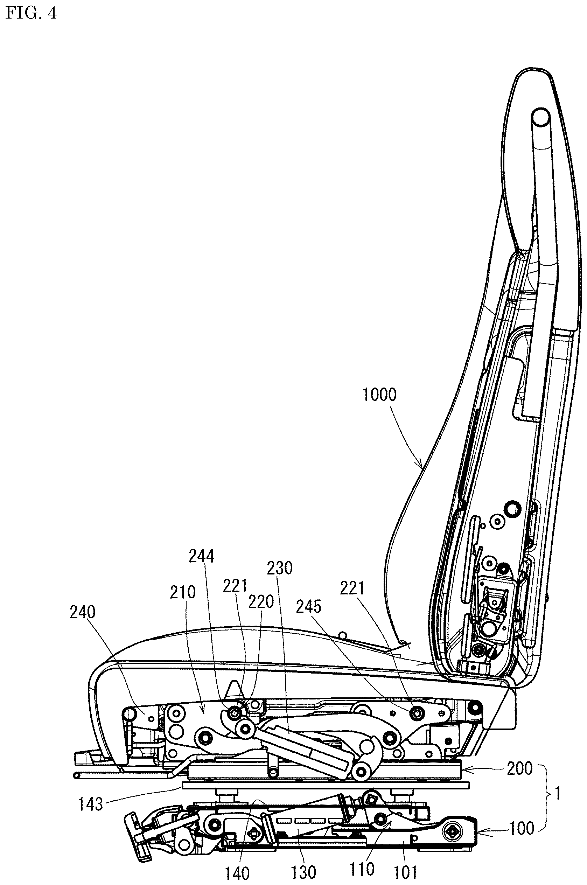

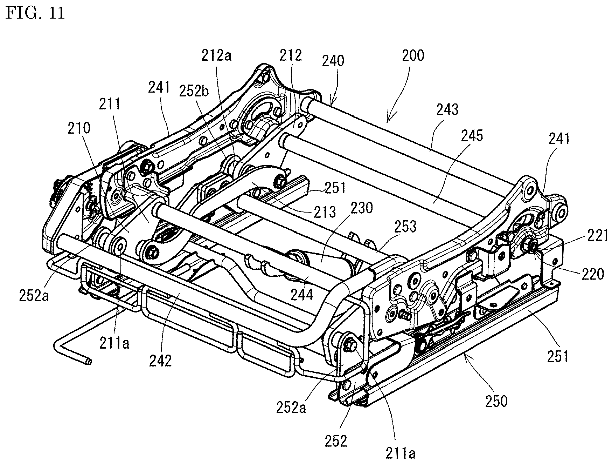

Next, the second suspension unit 200 is described. The second suspension unit 200 includes a seat support part 240 supported to be movable up and down through a second link mechanism 210, a spring mechanism 220, and the damper 230 relative to the movable support part 140 of the first suspension unit 100 (refer to FIG. 4, FIG. 11, and the like).

In this embodiment, a cushion frame supporting a seat cushion part 1100 of the seat 1000 constitutes the seat support part 240, and has side frames 241, 241, a front edge frame 242, a rear edge frame 243, and so on. The seat support part 240 constituted of the cushion frame is supported by upper rails 252 of sliders 250, and lower rails 251 are each fixed to the movable support part 140 through an attachment plate 143 (refer to FIG. 4), and the sliders 250 move up and down together with the movable support part 140.

The seat support part 240 is supported through the second link mechanism 210 by the upper rails 252, as illustrated in FIG. 11 and FIG. 14. The second link mechanism 210 has a pair of left and right front links 211, 211, a pair of left and right rear links 212, 212, and connecting links 213, 213 each connecting the front link 211 and the rear link 212 with each other on each of the left and right sides.

The front links 211, 211 are each formed in a substantial trapezoid (refer to FIG. 14), and upper portions in the vicinity of their front ends are pivotally supported on front brackets 252a of the upper rails 252 by shaft members 211a, and upper portions in the vicinity of their rear ends are relatively rotatably linked to a front-side reinforcing pipe 244 extending in the rear of shaft members 211a in a plan view as illustrated in FIG. 11, between the side frames 241, 241 of the seat support part 240.

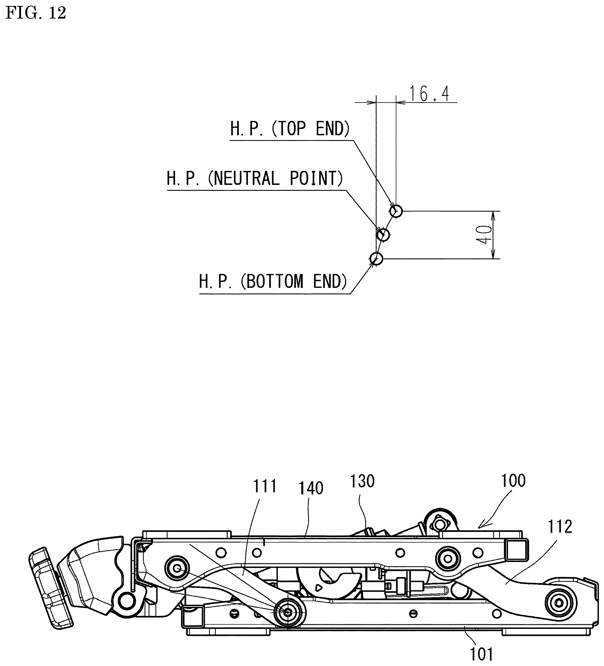

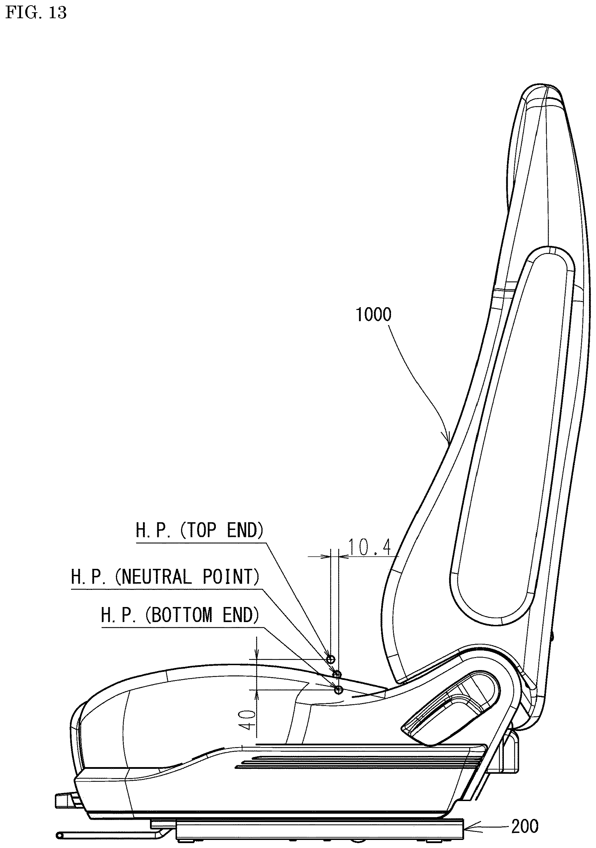

The rear links 212, 212 are each formed in a substantial triangle whose apex is on a lower side as illustrated in FIG. 11 and FIG. 14, and upper portions in the vicinity of their front ends are pivotally supported on rear brackets 252b of the upper rails 252 by shaft members 212a, and upper portions in the vicinity of their rear ends are relatively rotatably linked to a rear-side reinforcing pipe 245 extending in the rear of shaft members 212a in a plan view, between the side frames 241, 241 of the seat support part 240. Accordingly, the front links 211, 211 and the rear links 212, 212 of the second link mechanism 210 have the shaft members 211a, 212a as rotation centers respectively to rotate in a B direction in FIG. 14, and the seat support part 240 moves up and down between an upper limit position and a lower limit position along the rotation trajectory. That is, between the movable support part 140 supported by the first link mechanism 110 of the first suspension 100 and the seat support part 240 supported by the second link mechanism 220 of the second suspension unit 200, as illustrated by arrows of the A direction and the B direction in FIG. 14, operational directions seen from the side at a time of up-down movement are opposite to each other in terms of the front-back direction. Accordingly, at the time of up-down movement, when it is assumed that the seat 1000 is supported by only the first suspension unit 100, the closer a trajectory of the up-down movement of a hip point (H. P.) of a seated person is to an upper limit position, the more backward it is, and the closer the trajectory is to a lower limit position, the more forward it is, as illustrated in FIG. 12, and when it is assumed that the seat 1000 is supported by only the second suspension unit 200, the closer a trajectory of the up-down movement of a hip point (H. P.) of the seated person is to an upper limit position, the more forward it is, and the closer it is to a lower limit position, the more backward it is, as illustrated in FIG. 13. As a result, a trajectory at the time of up-down movement of a hip point (H. P.) of the seated person in the suspension mechanism 1 of this embodiment obtained by combining both of the stacked first suspension unit 100 and second suspension unit 200 is a trajectory in a substantially vertical direction ("substantially vertical" means that a forward and backward maximum displacement amount is preferably 8 mm or less, and more preferably 6 mm or less) as illustrated in FIG. 14. Consequently, according to the suspension mechanism 1 of this embodiment, the seated person is relatively displaced substantially vertically to up-down vibration, and forward or backward displacement is reduced, which makes stability of a posture high.

The spring mechanism (hereinafter, referred to as "a second spring mechanism") 220 of the second suspension unit 200 is constituted of linear springs which exhibit linear characteristics that their load-deflection characteristics change approximately linearly. Specifically, the second spring mechanism 220 is constituted of torsion bars 221, 221 inserted through the front-side reinforcing pipe 244 and the rear-side reinforcing pipe 245 respectively (refer to FIG. 4, FIG. 14, and the like). The torsion bars 221, 221, in each of which one end is fixed to one of the side frames 241, and the other end is passed through the other of the side frames 241 to form a free end, are arranged so as to bias the seat support part 240 upward. Consequently, in a state where a person is seated, when the seat support part 240 is displaced relatively downward, spring force intended to return the person to a seating position acts.

As the damper 230, one whose elongation-side damping force is relatively high is used when the one whose damping force is small is employed as the first damper 130 of the first suspension unit 100 as described above. Further, it is also possible to use the one whose damping force is high as the first damper 130, and moreover, to use the one whose damping force is high also as the second damper 230, as described above. This enables a configuration capable of coping with larger impact vibration. However, in each of the cases, the one whose elongation-side damping force is larger than its contraction-side damping force is preferable, and moreover, the one having a characteristic that its elongation-side damping force is 1.5 times or more as large as its contraction-side one is also preferable, as described above.

Note that the second damper 230 is disposed by engaging a tip of a piston rod 231 with the front-side reinforcing pipe 244, and engaging a bottom of a cylinder 232 with a rear-side lower pipe 253 extending between the upper rails 252, 252 of the sliders 250 (refer to FIG. 11 and the like).

Here, the first suspension unit 100 and the second suspension unit 200 are preferably set such that the up-down strokes are equal to each other. Thus, a position of the hip point of the person seated on the seat 1000 is stabilized as described above. In this case, when the seat 1000 is applied to a driver seat, a sense of incongruity during control and operation thereof is reduced, and therefore, the up-down stroke of the whole suspension mechanism 1 is more preferably set to be within 80 mm. On the one hand, in a case of a configuration such that one whose damping force is as small as 500 N or less is employed as the first damper 130, the up-down stroke of the first suspension unit 100 can also be set to be longer than the up-down stroke of the second suspension unit 200. Setting the up-down stroke to be long widens response regions of a vibration absorption characteristic and an impact absorption characteristic. However, too long up-down stroke also leads to the sense of incongruity at the time of being seated, and it is therefore preferable that even the longest up-down stroke of the first suspension unit 100 is set to fall within twice as long as the up-down stroke of the second suspension unit 200, for example, when the up-down stroke of the second suspension unit 200 is set to 40 mm, the up-down stroke of the first suspension unit 100 is within 80 mm. Note that an adjustment of the up-down stroke can be made by an adjustment of lengths of the first link mechanism 110 and the second link mechanism 210, an adjustment of lengths or elongation and contraction amounts of the dampers 130, 230, an adjustment of attachment angles thereof, and the like.

According to this embodiment, when the one whose damping force is as small as 500 N or less is employed as the first damper 130, with respect to vibration in a normal region which is input through a vehicle body floor, the first damper 130 is easily operated to elongate and contract, so that the elastic force of the first spring mechanism 120 acts effectively, which enables vibration to be effectively absorbed by the up-down movement of the first suspension unit 100. In particular, according to this embodiment, the first spring mechanism 120 is constituted by a combination of the torsion bars 121, 121 having the positive spring characteristic and the magnetic spring 122 having the negative spring characteristic, and has the constant load region where the superposed spring constant is substantially zero in a certain displacement range (which is normally set in the vicinity of the neutral position of the first suspension unit 100). Therefore, the vibration absorption characteristic is higher. Further, due to a small damping force of the first damper 130, a reciprocating movement of the piston in the cylinder 132 is performed smoothly by even microvibration, and energy absorbing ability is also high.

Further, when impact vibration having a large amplitude is input due to large bumps and potholes or the like on a road surface, the first damper 130 of the first suspension unit 100 cannot exhibit the damping force corresponding thereto, but the second damper 230 is operated to elongate and contract, so that the damping force of the suspension unit 200 greatly acts. Therefore, in this embodiment, the impact vibration can also be efficiently absorbed.

On the one hand, when the one whose damping force is high is employed also as the first damper 130 of the first suspension unit 100 similarly to the second damper 230, it is possible to exhibit a high damping effect on the impact vibration having a large amplitude.

### (Characteristic of first suspension unit 100 to which first damper 130 having small damping force is attached)

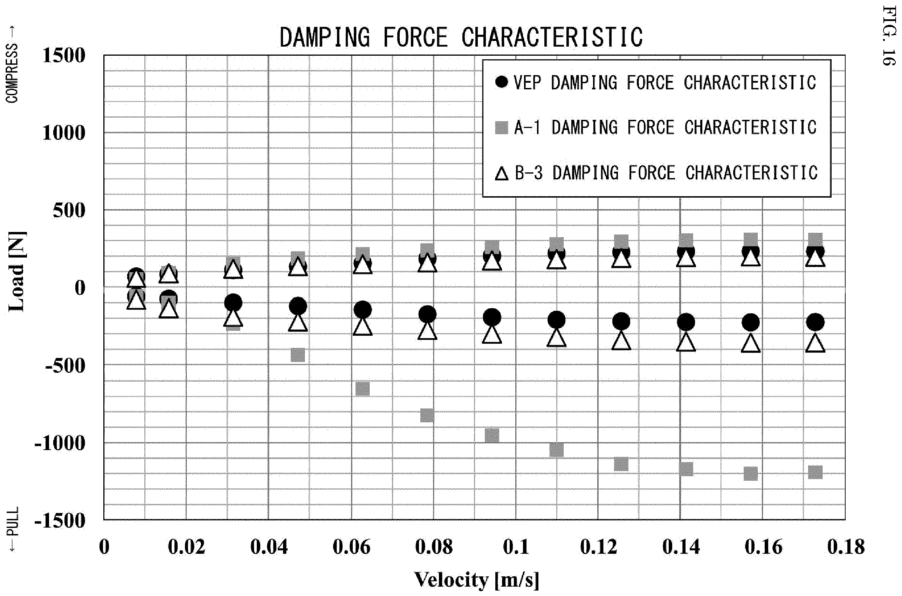

A characteristic of the single first suspension unit 100 employing one whose damping force was small as the first damper 130 was examined. At this time, a movement of the second link mechanism 210 of the second suspension unit 200 was fixed to conduct a test. Characteristics of the spring mechanism 120, and the torsion bars 121, 121 and the magnetic spring 122 constituting the spring mechanism 120, which were used for the test, were as illustrated in FIG. 15. As the first dampers 130, a damper in which a line-shaped member was wound around the aforesaid piston, and a friction damping force and a viscous damping force acted (a mark of "VEP" in FIG. 16 and FIG. 17) and an oil damper (a mark of "B-3" in FIG. 16 and FIG. 17, 400 N elongation-side damping force and 200 N contraction-side damping force at 0.3 m/s) were each attached, and measurement was performed.

### Static load characteristic

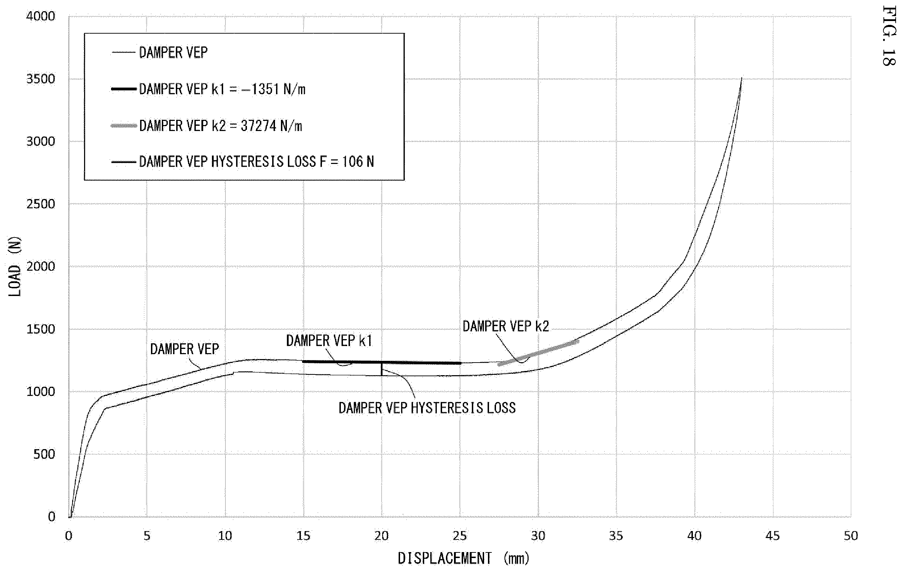

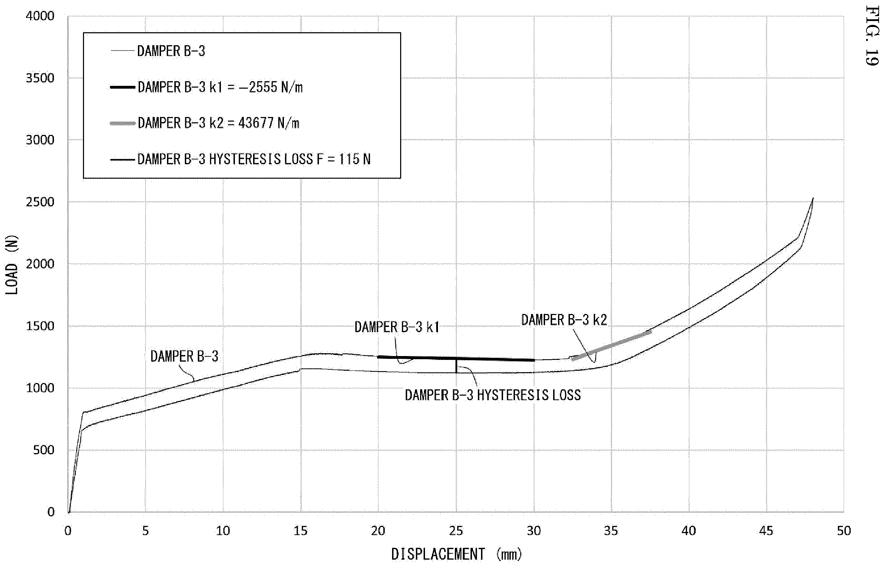

FIG. 18 and FIG. 19 each illustrate a load-deflection characteristic of the suspension mechanism 1 placed such that the aforesaid first suspension unit 100 was movable and the second suspension unit 200 did not act. In each of "VEP" and "B-3", a pressurizer was operated thereon at a speed of 50 mm/min, and a load mass at a neutral position (which was set at 20 mm in the one using the "VEP" damper corresponding to a maximum stroke of the "VEP" damper, and was set at 25 mm in the one using the other damper) was set to be 1250 N in a loading process, and the measurement was performed. A spring constant k1 in a range of ±5 mm at a position centering the neutral position in the loading process, a spring constant k2 in a range of ±2.5 mm at a position centering a position displaced 10 mm downward from the neutral position in the loading process, and a hysteresis loss at the neutral position were as illustrated in each of the charts.

### Vibration test

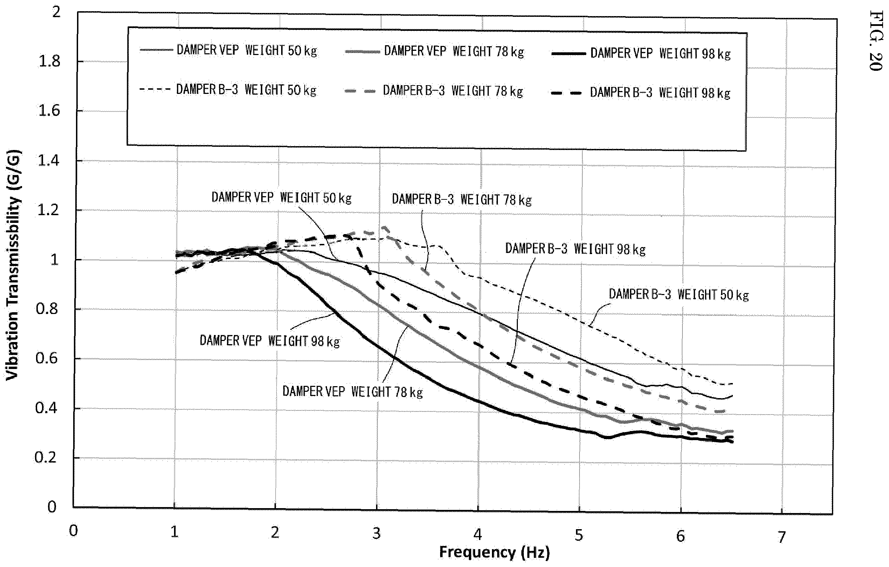

The load mass including the seat 1000 on the first suspension unit 100 was adjusted by putting weights thereon so as to be 50 kg, 78 kg, or 98 kg, and each was set in an up-down direction uniaxial vibrator to be vibrated by input vibration having a sine sweep waveform (1 to 6.5 Hz) with a ±5 mm amplitude, and their vibration transmissibilities were measured. FIG. 20 illustrates the results.

In the ones using the "VEP" dampers, the vibration transmissibilities were each 1.1 or less at or near a resonance point of 2 Hz as illustrated in this chart. Further, the vibration transmissibilities were further lowered in a frequency region higher than the resonance point, and the vibration transmissibilities at 4 Hz in cases of the load masses of 78 kg and 98 kg were each 0.6 or less. In the ones using the "B-3" dampers, the vibration transmissibilities were each 1.2 or less at or near a resonance point of 3 Hz and, further, the vibration transmissibilities were also gradually lowered in a frequency region higher than the resonance point, and the vibration transmissibilities at 4 Hz in cases of the load masses of 78 kg and 98 kg were each 0.8 or less.

### (Characteristic of second suspension unit 200)

### Static load characteristic

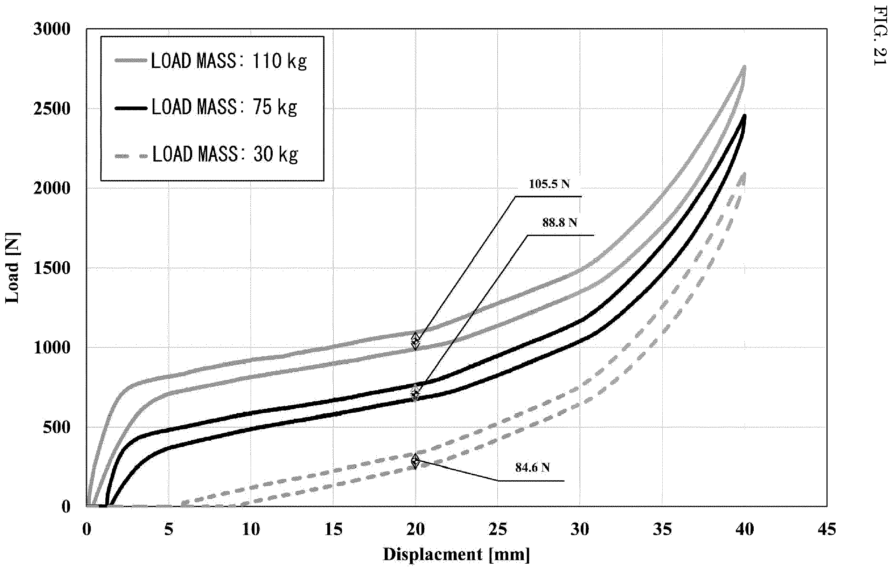

As the second damper 230 used in the second suspension unit 200, the aforesaid "A-1" damper was employed, and a movement of the first suspension unit 100 was fixed to measure a static load characteristic. The pressurizer was operated thereon at a speed of 50 mm/min, and load masses at a neutral position (20 mm: balanced point) were set to be 110 kg, 75 kg, and 30 kg in a loading process, and the measurement was performed. FIG. 21 illustrates the results.

In a case of a load mass of 75 kg, in a static spring constant k0 = 25000 N/m at or near a neutral position (balanced point) (17.5 to 22.5 mm in the loading process), a hysteresis loss at the neutral position was 88.8 N. Note that a static spring constant k4 = 309000 N/m of 1.2 to 2.2 mm, a static spring constant k3 = 15900 N/m of 10 to 15 mm, a static spring constant k1 = 43800 N/m of 25 to 30 mm, and a static spring constant k2 = 160000 N/m of 35 to 40 mm in the loading process were obtained.

### Damping ratio

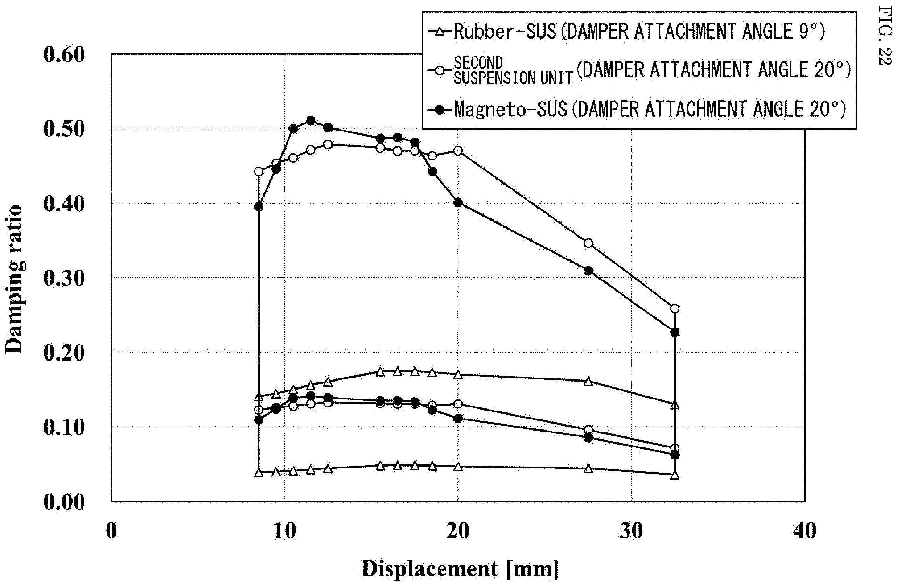

FIG. 22 illustrates damping ratios of the second suspension unit 200 found from calculation by using a dynamic spring constant found from the static load characteristic in the load mass of 75 kg and a damping force at 0.3 m/s. As illustrated in this chart, on a contraction side, the damping ratio is 0.15 or less, but on an elongation side, the damping ratio is larger than that on the contraction side, in particular, the damping ratio is about 0.4 to 0.5 at and after a neutral position when the seat support part 240 rises, and it is found that the second suspension unit 200 has a high damping characteristic. Note that a damping ratio of "Magneto-SUS" illustrated in FIG. 22 is data when the "A-1" damper is used as the first damper 130 in the first suspension unit 100, and also in this case, a high damping ratio is obtained on an elongation side. Further, a damping ratio of "Rubber-SUS" is data of a suspension having a structure in which torsion bars 121 are detached from the first suspension unit 100 and rubbers are attached in opposite positions of the movable support part 140 and the fixed part 101, and in this case, an elongation-side damping ratio of a damper was low, and remained fixed at or near 0.15.

### (Vibration characteristic of suspension mechanism 1)

On the suspension mechanism 1 using the aforesaid "B-3" damper as the first damper 130 in the first suspension unit 100 and using the aforesaid "A-1" damper as the second damper 230 in the second suspension unit 200, a vibration test was conducted. Specifically, the seat 1000 including the aforesaid suspension mechanism 1 was set in a vibrator, and a SEAT value (Seat Effective Amplitude Transmissiblility factor) was found based on JIS A 8304: 2001 (ISO 7096: 2000). Under the input spectral class EM6 (7.6 Hz excitation center frequency, a 0.34 (m/s²)²/Hz maximum value of PSD) which is the standard for "crawler tractor-dozer with 50,000 kg or less", the test was conducted while a subject with a 57 kg body weight was seated. As a result, the obtained average value of the SEAT values was 0.68. Because the standard of the SEAT value under the EM6 is less than 0.7, the standard was satisfied.

For the purpose of comparison, when on the suspension mechanism 1 in which the first damper 130 remained "B-3" and the "B-1" damper in FIG. 17 (1370 N elongation-side damping force, 760 N contraction-side damping force) was employed as the second damper 230, the similar test was conducted with respect to the same subject, the average value of the SEAT values was 0.74, which did not satisfy the standard. Further, in each of a case where the "A-2" damper in FIG. 17 (900 N elongation-side damping force, 250 N contraction-side damping force) was employed as the first damper 130, and the "A-1" damper was employed as the second damper 230, and a case where the same A-2 damper was employed as the first damper 130, and the "B-1" damper was employed as the second damper 230, the similar test was conducted with respect to the same subject. In each of the cases, the average value of the SEAT values was 0.77, which did not satisfy the standard.

### (Characteristic of suspension mechanism 1 when one whose damping force is equal to or more than a predetermined damping force is employed as first damper 130)

As the first damper 130, the "A-1" damper was employed, and as the second damper 230, the "B-1" damper in FIG. 17 (1370 N elongation-side damping force, 760 N contraction-side damping force) was employed. The two dampers have the same damping force on their elongation sides, but on their contraction sides, the second damper 230 has a larger damping force than that of the first damper 230.

The seat 1000 including the aforesaid suspension mechanism 1 was set in a vibrator, and the vibration test was conducted. Specifically, a SEAT value (Seat Effective Amplitude Transmissiblility factor) was found based on JIS A 8304: 2001 (ISO 7096: 2000). Under the input spectral class EM6 (7.6 Hz excitation center frequency, a 0.34 (m/s²)²/Hz maximum value of PSD) which is the standard for "crawler tractor-dozer with 50,000 kg or less", the test was conducted while a subject with a 99 kg body weight was seated. As a result, the obtained average value of the SEAT values was 0.56. Because the standard of the SEAT value under the EM6 is less than 0.7, the standard was satisfied.

Further, in a test conducted by seating a subject with the same body weight of 99 kg as described above under the input spectral class EM8 (3.3 Hz excitation center frequency, a 0.4 (m/s²)²/Hz maximum value of PSD) which is the standard for "compact loader with 4,500 kg or less", the SEAT value was 0.76. Because the standard of the SEAT value under the EM8 is less than 0.8, the standard was satisfied.

### (Test regarding impact vibration with large amplitude)

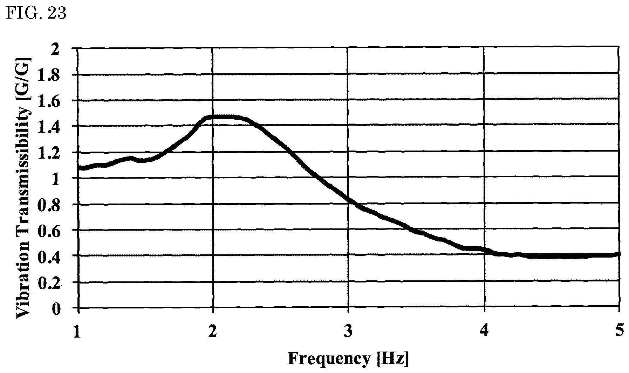

Next, in a state of seating the subject with the same body weight of 99 kg as described above, the vibration test was conducted with the total amplitude (p-p) of 32 mm. FIG. 23 illustrates the result.

As obvious from FIG. 23, a resonant frequency was reduced to 2.05 Hz, and a vibration transmissibility at this time was also 1.47. Further, the vibration transmissibility was 0.8 or less even in a frequency range higher than 3 Hz, and it was found that the suspension mechanism 1 was excellent in an absorption characteristic of the impact vibration. Consequently, employing the one whose damping force is equal to or more than a predetermined damping force as the first damper 130 makes it possible to provide the suspension mechanism 1 having a high effect on a vibration input with a large amplitude.

### Explanation of Reference Signs

- 1: suspension mechanism
- 100: first suspension unit
- 110: link mechanism
- 111: front link
- 112: rear link
- 120: spring mechanism
- 121: torsion bar
- 122: magnetic spring
- 130: first damper
- 140: movable support part
- 200: second suspension unit
- 210: link mechanism
- 211: front link
- 212: rear link
- 220: spring mechanism
- 221: torsion bar
- 230: second damper
- 240: seat support part

## Claims

1. A suspension mechanism comprising:
a first suspension unit including a movable support part supported to be movable up and down through a first link mechanism, a spring mechanism, and a damper relative to a fixed part; and
a second suspension unit including a seat support part disposed above the first suspension unit and supported to be movable up and down through a second link mechanism, a spring mechanism, and a damper relative to the movable support part,
wherein rotational directions of the first link mechanism and the second link mechanism are set so as to be opposite to each other in terms of the front-back direction on a basis of the respective rotation centers.

2. The suspension mechanism according to claim 1, wherein, as each of the dampers, one whose elongation-side damping force is higher than a contraction-side damping force is used.

3. The suspension mechanism according to claim 2, wherein, as the dampers, ones in which at least one of the elongation-side damping force and the contraction-side damping force is different are used.

4. The suspension mechanism according to any one of claims 1 to 3,
wherein the spring mechanism of one of the first suspension unit and the second suspension unit comprises:
a linear spring exhibiting a linear characteristic; and
a magnetic spring including stationary magnets, and a movable magnet whose relative position to the stationary magnets is displaced in accordance with relative operation of the intermediate frame or the upper frame, and exhibiting a nonlinear characteristic that a spring constant is changed in accordance with the relative position of the stationary magnets and the movable magnet, and
includes a characteristic that a spring constant is substantially zero in a predetermined displacement range.

5. The suspension mechanism according to claim 4,
wherein the spring mechanism of the other of the first suspension unit and the second suspension unit is constituted of a linear spring exhibiting a linear characteristic.

6. The suspension mechanism according to claim 4 or 5, wherein the linear spring is a torsion bar.

7. The suspension mechanism according to any one of claims 1 to 6, wherein an up-down stroke of the first suspension unit and an up-down stroke of the second suspension unit are equal to each other.

8. The suspension mechanism according to any one of claims 1 to 7 used for support for a seat of a driver seat of a construction machine.
